# DEMANDE DE BREVET EUROPEEN

(11) **EP 2 634 754 A1**
(43) Date de publication de la demande: **04.09.2013**
(21) Numéro de dépôt: 12305250.8
(22) Date de dépôt: 01.03.2012
(51) Int. Cl.: G07D 7/00, B42D 15/10

(54) **Procédé de vérification de documents, et dispositif de mise en oeuvre d'un tel procédé**

(71) Demandeur: Gemalto SA, 92190 Meudon (FR)
(72) Inventeur: Rouchouze, Bruno, 92190 MEUDON (FR); Faher, Mourad, 92190 MEUDON (FR); Perticara, François, 92190 MEUDON (FR); Tripotin, Guennolé, 92190 MEUDON (FR)

(57) **Abrégé**

La présente invention se rapporte à un procédé de vérification, par un utilisateur autorisé (201), d'un document (205) présentant des moyens de contrôle électronique (206). Le procédé comporte les différentes étapes consistant à :
- lire (105), au moyen d'un équipement électronique de lecture (202) équipant l'utilisateur autorisé (201), des informations mémorisées dans les moyens de contrôle électronique (206) du document vérifié (205) ;
- transférer (109) une information de vérification, établie à partir des informations mémorisées dans les moyens de contrôle électronique (206), depuis l'équipement électronique de lecture (202), vers un dispositif de visualisation (203) de l'utilisateur autorisé (201), le dispositif de visualisation (203) étant positionné, dans des conditions normales d'utilisation, face aux yeux de l'utilisateur autorisé (201), ledit dispositif de visualisation (203) étant transparent pour permettre audit utilisateur autorisé de regarder au travers.

## Description

### DOMAINE TECHNIQUE DE L'INVENTION

L'invention concerne un procédé de vérification de documents, notamment de documents sensibles. Elle se rapporte également à un dispositif apte à mettre en oeuvre un tel procédé de vérification.

Le domaine de l'invention est, d'une manière générale, celui du contrôle du caractère authentique de certains documents présentant des moyens de contrôle électroniques, notamment de documents dits sensibles. Par documents sensibles, on désigne essentiellement des documents délivrés par l'administration d'un pays et qui revêtent un caractère officiel, notamment rattaché à l'identité d'un individu. Ainsi, par exemple, une carte d'identité, un passeport, un permis de conduire, une carte de séjour constituent des documents sensibles. Des moyens de contrôle électroniques sont dorénavant souvent présents sur de tels documents, essentiellement pour les plus récents d'entre eux. Les moyens de contrôle électroniques présents sur de tels documents sont le plus souvent de type puce électronique, mais ils peuvent également être constitués par tout type de support (bande magnétique, par exemple) apte à mémoriser une information accessible par un moyen de lecture électronique.

### ARRIERE PLAN TECHNOLOGIQUE DE L'INVENTION

Il existe aujourd'hui différents appareils aptes à vérifier le caractère authentique de certains documents sensibles présentant des moyens de contrôle électronique. De tels appareils sont typiquement des équipements comportant des moyens de lecture, des moyens de contrôle électroniques, et des moyens de restitution d'une information de vérification, qui le plus souvent donne simplement une indication quant à l'authenticité du document contrôlé. L'information de vérification est restituée au le plus souvent au niveau d'un écran de contrôle, ou d'un simple indicateur lumineux (avec une couleur associée à une situation normale pour le document contrôlé, et une couleur associée à une situation non-conforme pour le document contrôlé).

Pour un agent effectuant par exemple un contrôle d'identité, les dispositifs existant dans l'état de la technique ne présentent pas une sécurité optimale : en effet, afin de prendre connaissance de l'information de vérification, l'agent doit nécessairement quitter des yeux la personne contrôlée. Une telle perte de surveillance, même temporaire, peut s'avérer risquée si la personne contrôlée est dangereuse.

Ainsi, il est nécessaire, pour garantir une meilleure sécurité des agents effectuant de tels contrôles, d'améliorer les dispositifs de vérification existant.

C'est un objet de la présente invention que d'apporter une solution au problème qui vient d'être exposé. A cet effet, dans l'invention, on propose un procédé et un dispositif grâce auquel un agent effectuant un contrôle de documents, notamment de documents sensibles présentant des moyens de contrôle électroniques, peut maintenir le regard porté sur la personne contrôlée, tout en ayant un accès visuel à des informations de vérification générées à partir de données contenues dans le document vérifié. Ainsi, on prévoit dans l'invention que des informations sont présentées à l'utilisateur autorisé sur un support au travers duquel l'utilisateur autorisé peut regarder ; il visualise ainsi simultanément la personne contrôlée, et les informations de vérification. Avantageusement, on prévoit différents niveaux de sécurité pour le transfert des informations au sein du dispositif selon l'invention, afin notamment de prévenir toute tentative de récupération de données par des personnes non autorisées.

L'invention concerne ainsi essentiellement un procédé de vérification, par un utilisateur autorisé, d'un document présentant des moyens de contrôle électronique Le procédé comporte les différentes étapes consistant à :
- lire, au moyen d'un équipement électronique de lecture équipant l'utilisateur autorisé, des informations mémorisées dans les moyens de contrôle électronique du document vérifié ;
- transférer une information de vérification, établie à partir des informations mémorisées dans les moyens de contrôle électronique, depuis l'équipement électronique de lecture, vers un dispositif de visualisation de l'utilisateur autorisé, le dispositif de visualisation étant positionné, dans des conditions normales d'utilisation, face aux yeux de l'utilisateur autorisé, ledit dispositif de visualisation (203) étant transparent pour permettre audit utilisateur autorisé de regarder au travers.

Outre les caractéristiques principales qui viennent d'être mentionnées, le procédé selon l'invention peut avantageusement comporter une ou plusieurs caractéristiques complémentaires parmi les suivantes, considérées individuellement ou selon toute combinaison techniquement réalisable :
- l'étape de transfert de l'information de vérification est réalisée depuis l'équipement électronique vers au moins un écran de visualisation intégré dans un verre d'une paire de lunettes portée par l'utilisateur autorisé.
- le procédé comporte l'étape supplémentaire consistant à, préalablement à l'étape de transfert de l'information de vérification, connecter de manière sécurisée, le dispositif de visualisation à l'équipement électronique de lecture.
- le procédé comporte les étapes supplémentaires consistant à :
   - préalablement à l'étape de transfert de l'information de vérification, crypter l'information de vérification dans l'équipement électronique de lecture pour générer une information de vérification cryptée ;
   - décrypter, avec des moyens de décryptage intégrés dans le dispositif de visualisation, l'information de vérification cryptée pour obtenir l'information de vérification établie à partir des informations mémorisées dans les moyens de contrôle électronique du document vérifié.
- le procédé comporte l'étape supplémentaire consistant à, préalablement à l'étape de lecture des informations mémorisées dans les moyens de contrôle électronique, vérifier, avec des moyens de contrôle intégrés dans l'équipement électronique de lecture, la validité du document à vérifier.
- le procédé comporte l'étape supplémentaire consistant à, préalablement à l'étape de lecture des informations mémorisées dans les moyens de contrôle électronique, vérifier l'identité de l'utilisateur autorisé.
   - le procédé comporte l'étape supplémentaire consistant à déclencher, par l'utilisateur autorisé, l'opération de transfert de l'information de vérification, au moyen d'un dispositif de contrôle d'affichage de l'information intégré dans l'équipement électronique de lecture.
- le procédé comporte l'étape supplémentaire consistant à appairer l'équipement électronique de lecture et le dispositif de visualisation.

La présente invention se rapporte également à un dispositif de vérification, équipant un utilisateur autorisé, d'un document présentant des moyens de contrôle électronique. Ledit dispositif comporte :
- un équipement électronique de lecture d'informations mémorisées dans les moyens de contrôle électronique du document vérifié ;
- un dispositif de visualisation transparent positionné, dans des conditions normales d'utilisation, face aux yeux de l'utilisateur autorisé ;
- des moyens de transfert d'une information de vérification, établie à partir des informations mémorisées dans les moyens de contrôle électronique, depuis l'équipement électronique de lecture, vers le dispositif de visualisation de l'utilisateur autorisé.

Le dispositif de visualisation étant transparent, l'utilisateur autorisé est apte à simultanément visualiser la personne contrôlée et l'information de vérification.

Outre les caractéristiques principales qui viennent d'être mentionnées, le dispositif selon l'invention peut avantageusement comporter une ou plusieurs caractéristiques complémentaires parmi les suivantes, considérées individuellement ou selon toute combinaison techniquement réalisable :
- le dispositif de visualisation est intégré dans une paire de lunettes.
- les moyens de transfert comportent une connexion filaire blindée reliant le dispositif de visualisation à l'équipement électronique de lecture.
- l'équipement électronique de lecture comporte des moyens de contrôle de l'affichage de l'information sur le dispositif de visualisation.
- les moyens de contrôle de l'affichage de l'information sur le dispositif de visualisation comportent une barre de défilement capacitif, notamment placée sur une face accessible de l'équipement électronique de lecture.
- le dispositif comporte des moyens d'identification, notamment placés sur une face accessible de l'équipement électronique de lecture, de l'utilisateur autorisé.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

Les figures montrent :

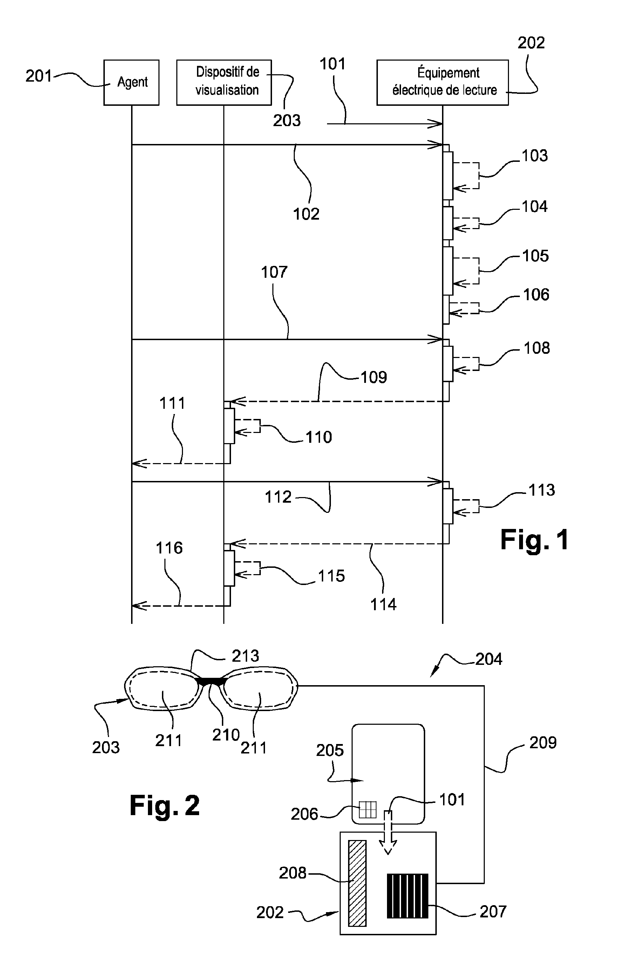

- à la figure 1, une représentation schématique d'une succession d'opérations intervenant au sein du dispositif selon l'invention pour un exemple de mise en oeuvre du procédé selon l'invention ;
- à la figure unique 2, illustre de manière schématique une représentation schématique d'un exemple de réalisation du dispositif selon l'invention.

### DESCRIPTION DETAILLEE D'AU MOINS UN MODE DE REALISATION DE L'INVENTION

Sauf précision contraire, un élément apparaissant sur plusieurs figures aura présente la même référence.

La figure 1 représente une succession d'étapes, d'opérations intervenant dans un exemple de mise en oeuvre du procédé selon l'invention. La figure 1 est décrite conjointement avec la figure 2, qui montre un exemple de dispositif selon l'invention apte à mettre en oeuvre le procédé décrit à la figure 1.

Les opérations décrites à la figure 1 sont des opérations qui interviennent entre trois principales entités : un agent 201, qui représente un utilisateur autorisé d'un dispositif 204 de vérification de documents selon l'invention ; un équipement électronique de lecture 202 équipant l'agent 201, et un dispositif de visualisation 203. Le dispositif de visualisation 203 et l'équipement électronique de lecture 202 appartiennent au dispositif 204 de vérification de documents.

Une première étape 101 du procédé selon l'invention réside dans une opération d'introduction dans un lecteur de l'équipement électronique de lecture 202 d'un document 205. Le document 205 est typiquement un document sensible qui comporte des moyens de contrôle électronique 206 mémorisant un certain nombre d'informations qui peuvent être confidentielles. Les moyens de contrôle électronique 206 sont, dans l'exemple représenté, une puce électronique, ou circuit intégré, muni d'une interface de communication de type à contact et/ou sans contact. Le document 205 est par exemple, de manière non limitative, une carte d'identité, un passeport, un permis de conduire, un titre de séjour....

Dans un exemple avantageux de réalisation du dispositif 204, l'équipement électronique de lecture 202 comporte un moyen d'authentification 207 de l'agent 201. Typiquement, le moyen d'authentification 207 est un moyen d'authentification fort, de type capteur biométrique apte à identifier un utilisateur autorisé par la reconnaissance d'une empreinte digitale.

Ainsi, dans une étape 102 du procédé selon l'invention, l'agent 201 s'identifie grâce au moyen d'authentification 207, par exemple en apposant un de ses doigts sur le moyen d'authentification 207. Dans la pratique, plusieurs agents sont susceptibles d'être autorisés à utiliser un même équipement électronique de lecture 202.

On procède alors, dans une étape 103, à une opération de vérification de l'identité de l'agent 201. Cette opération est réalisée par exemple au moyen d'un microprocesseur du moyen d'authentification 207 qui gère des opérations de comparaison entre des données biométriques récupérées par le moyen d'authentification 207 et des données mémorisées dans un module de mémoire de l'équipement électronique de lecture 202. Dans certains modes de mise en oeuvre du procédé selon l'invention, l'étape 101 d'introduction du document 205 dans le lecteur peut intervenir après les étapes 102 et 103 d'identification et de vérification.

Si l'opération de vérification de l'identité de l'agent 201 aboutit à la conclusion que l'agent 201 est effectivement un utilisateur autorisé de l'équipement électronique de lecture 202, on procède alors, toujours au sein de l'équipement électronique de lecture 202, à une opération 104 d'authentification du document 205, pour déterminer si celui-ci n'est pas un faux document ; des moyens de vérification, par exemple des données spécifiques, peuvent être mémorisées dans les moyens de contrôle électronique 206 à cet effet. A titre d'exemple, on peut envisager dans ce but un moyen optique présent dans l'équipement 202 pour vérifier l'authenticité du document 205. Avantageusement, on prévoit alors une opération de vérification optique du corps du document 205, suivie d'une vérification logicielle confrontant les données obtenues lors de la vérification optique (le document a par exemple été scanné) avec des données mémorisées dans les moyens de contrôle électroniques 206, lesdites données mémorisées étant dépendantes de données présentes sur le corps du document. Un exemple de mise en oeuvre d'une telle vérification est décrit dans le document WO 2006/038075.

Préalablement à cette opération d'authentification 104, on peut, dans certains modes de mise en oeuvre, procéder à une opération de contrôle supplémentaire en demandant à la personne contrôlée d'entrer un code, typiquement un code pin, a niveau de l'équipement électronique de lecture 202. Le protocole PACE serait alors exécuté entre le lecteur de l'équipement électronique de lecture 202 et les moyens de contrôle électroniques 206 pour vérifier le caractère exact du code pin saisi. L'opération de contrôle supplémentaire n'est observée que dans certains modes de mises en oeuvre de l'invention. Cette opération de contrôle supplémentaire ne doit pas empêcher l'agent 201 de contrôler le contenu électronique du document, afin de parer à une absence de coopération de la personne contrôlée, absence de coopération volontaire si elle est récalcitrante ou involontaire si la personne contrôlée n'est pas en possession de tous ses moyens.

Dans l'hypothèse où le document 205 a passé avec succès l'opération 104 d'authentification, on procède, dans le mode de mise en oeuvre illustré, à une opération 105 de lecture, au moyen du lecteur de l'équipement électronique de lecture 202, d'informations mémorisées dans les moyens de contrôle électronique 206 du document 205.

Les opérations d'authentification 104 et de lecture 105 sont avantageusement réalisées au sein de l'équipement 102, sans échange avec l'extérieur de l'équipement 102. On bénéficie ainsi de moyens de vérification locaux. En procédant ainsi, on limite les possibilités d'interception par un tiers des informations échangées entre les moyens de contrôle électronique 206 et le lecteur de l'équipement électronique de lecture 202, même si il s'agit d'échanges d'informations sans contact.

Les informations lues dans l'opération de lecture 105 sont des informations relatives à la nature du document vérifié : ainsi, dans le cas d'une carte d'identité, les informations lues sont relatives à l'identité de la personne contrôlée - sous réserve qu'il s'agisse bien de sa carte d'identité - par exemple des informations codant une image du portrait de la personne contrôlée. Les informations lues permettent la génération d'au moins une information de vérification destinée à être transmise au dispositif de visualisation 203.

On procède alors dans une étape 106 suivante à l'émission d'une information de validation émise par l'équipement électronique de lecture 202 pour informer l'agent 201 que les informations ont été lues avec succès, ou non, au cours de l'opération 105 de lecture. L'information de validation peut par exemple être un signal sonore, dont l'intensité ou la mélodie varie en fonction du succès ou de l'échec de l'opération 105. Dans certains modes de mise en oeuvre du procédé selon l'invention, l'information de validation ne renseigne que sur le fait que le document 205 est un document qui n'a pas pu être contrôlé, indépendamment de la considération de la détection d'un éventuel caractère non authentique du document 205; c'est typiquement le cas si la puce du document 205 est restée muette.

Lorsque l'agent 201 prend connaissance du succès de l'opération de lecture 105, il procède alors au déclenchement du transfert des informations de vérifications générées au cours de l'opération 105 vers le dispositif de visualisation 203. A cet effet, l'agent 201 déclenche l'opération par une action 107 sur l'équipement électronique de lecture 202, avantageusement fixé à sa taille, par exemple au niveau d'une ceinture, par une action sur un dispositif 208 de contrôle d'affichage de l'information. Le dispositif 208 est un moyen permettant à l'agent 201 de gérer de manière simple et intuitive, en pouvant continuer à surveiller la personne contrôlée, la transmission d'informations vers le dispositif de visualisation 203 depuis l'équipement électronique de contrôle 202 ; il peut s'agir par exemple d'une barre de défilement capacitive placée sur une face directement accessible de l'équipement électronique de lecture 202. Dans d'autres exemples de réalisation, on prévoit que le dispositif de contrôle d'affichage est placé ailleurs que sur l'équipement électronique de lecture 202 ; il peut ainsi par exemple être disposé sur un vêtement de l'agent 201, ou même sur le dispositif de visualisation 203. Avantageusement, quelle que soit l'emplacement prévu pour le dispositif de contrôle d'affichage 208, il doit être facilement accessible pour l'agent 201, qui doit avantageusement pouvoir y accéder directement au moyen d'une unique main. Il peut, en fonction des exemples de réalisation de l'invention, revêtir d'autres formes que celle d'une barre de défilement capacitive : par exemple, il peut consister en un ou plusieurs boutons contacts de type bouton-poussoir.

L'agent 201 peut ainsi agir d'une seule main sur le dispositif 208, gardant son autre main pour réagir en cas de mouvement de la personne contrôlée, par exemple en saisissant une arme.

Une fois que l'agent 201 a agi sur le dispositif 208, on procède à une opération 108 de cryptage d'une première information de vérification, qui consiste par exemple en une première information identitaire, des informations de vérifications générées au cours de l'opération 105. La première information de vérification cryptée est alors automatiquement transmise, dans une première opération de transmission 109, depuis l'équipement électronique de lecture 202 vers le dispositif de visualisation 203.

Selon les modes de mise en oeuvre, la transmission 109 peut être réalisée de manière filaire ou non filaire. Cependant, avantageusement, on prévoit de relier l'équipement électronique de lecture 202 et le dispositif de visualisation 203 au moyen d'une liaison filaire blindée 209 afin qu'aucune information transmise ne puisse être interceptée frauduleusement. La liaison filaire blindée 209 assure ainsi le passage d'un bus reliant un microcontrôleur de l'équipement électronique de lecture 202 et un microcontrôleur 210 intégré dans le dispositif de visualisation 203.

La première information de vérification cryptée est alors décryptée dans une opération 110, au moyen d'une application de décryptage dont le fonctionnement est géré par le microcontrôleur 210 du dispositif de visualisation 203. On peut alors procéder, dans une étape 111, à l'affichage, sur le dispositif de visualisation 203, de la première information de vérification.

Dans l'invention, on prévoit que le dispositif de visualisation 203 est disposé, dans des conditions normales d'utilisation, face aux yeux de l'utilisateur autorisé 201. Ainsi, le dispositif de visualisation peut comporter au moins un écran de visualisation 211 intégré dans un verre 212 d'une paire de lunettes 213 portée par l'agent 201. Ainsi, dans l'invention, le dispositif de visualisation 203 comporte les écrans de visualisation 211 et le microcontrôleur 213.

On utilise, dans l'invention, la technologie dite OLED (Organic Light-Emitting Diode en langue anglaise, pour diode électroluminescente organique), pour réaliser l'écran ou les écrans de visualisation. Leur fonctionnement est contrôlé par le microcontrôleur 213, qui reçoit avantageusement depuis l'équipement électronique de lecture 202 des données relatives à la réalisation d'ne interface de type interface GUI gérant l'affichage des informations de vérification sur le dispositif de visualisation 203.

On désigne par l'expression "conditions normales d'utilisation" la situation dans laquelle l'utilisateur autorisé 201 est en service, dans une situation de contrôle d'une personne ; il a alors placé le dispositif de visualisation 203 (et donc, dans l'exemple illustré, les lunettes 213 lorsque le dispositif de visualisation 203 est intégré dans lesdites lunettes 213) dans une position prédéfinie par le fabricant du dispositif de visualisation 203. L'agent 201 peut ainsi, du fait du caractère transparent du dispositif de visualisation, visualiser simultanément une ou plusieurs informations de vérification, par exemple une photo de la personne contrôlée, tout en gardant son regard sur la personne contrôlée.

Les opérations 107 d'action par l'agent sur l'équipement électronique de lecture, de cryptage 108, de transmission 109, de décryptage 110 et d'affichage 111 peuvent être répétées, comme illustré, respectivement par des opérations 112, 113, 114, 115 et 116 similaires pour visualiser une information de vérification suivante.

Avantageusement, on prévoit dans l'invention que l'équipement électronique 202 et le dispositif de visualisation 203 sont appariés, par exemple lors de la fabrication du dispositif selon l'invention : l'appairage peut par exemple résider dans la mémorisation de codes spécifiques dans les microcontrôleurs de l'équipement électronique 202 et du dispositif de visualisation 203, qui lorsqu'ils sont reliés par la liaison filaire 209, sont confrontés pour déterminer leur possibilité d'échanger des informations.

## Revendications

1. Procédé de vérification, par un utilisateur autorisé (201), d'un document (205) présentant des moyens de contrôle électronique (206), **caractérisé en ce que** le procédé comporte les différentes étapes consistant à :
- lire (105), au moyen d'un équipement électronique de lecture (202) équipant l'utilisateur autorisé (201), des informations mémorisées dans les moyens de contrôle électronique (206) du document vérifié (205) ;
- transférer (109) une information de vérification, établie à partir des informations mémorisées dans les moyens de contrôle électronique (206), depuis l'équipement électronique de lecture (202), vers un dispositif de visualisation (203) de l'utilisateur autorisé (201), le dispositif de visualisation (203) étant positionné, dans des conditions normales d'utilisation, face aux yeux de l'utilisateur autorisé (201), ledit dispositif de visualisation (203) étant transparent pour permettre audit utilisateur autorisé de regarder au travers.

2. Procédé selon la revendication 1 dans lequel l'étape de transfert (109) de l'information de vérification est réalisée depuis l'équipement électronique de lecture (202) vers au moins un écran de visualisation (211) intégré dans un verre d'une paire de lunettes (213) portée par l'utilisateur autorisé (201).

3. Procédé selon la revendication 1, dans lequel ledit procédé comporte l'étape supplémentaire consistant à, préalablement à l'étape de transfert (109) de l'information de vérification, connecter de manière sécurisée, le dispositif de visualisation (203) à l'équipement électronique de lecture (202).

4. Procédé selon la revendication 1 dans lequel ledit procédé comporte les étapes supplémentaires consistant à :
- préalablement à l'étape de transfert (109) de l'information de vérification, crypter (108) l'information de vérification dans l'équipement électronique de lecture (202) pour générer une information de vérification cryptée ;
- décrypter (110), avec des moyens de décryptage intégrés dans le dispositif de visualisation (203), l'information de vérification cryptée pour obtenir l'information de vérification établie à partir des informations mémorisées dans les moyens de contrôle électronique (206) du document vérifié (205).

5. Procédé selon la revendication 1 dans lequel ledit procédé comporte l'étape supplémentaire consistant à, préalablement à l'étape de lecture (105) des informations mémorisées dans les moyens de contrôle électronique (206), vérifier, avec des moyens de contrôle intégrés dans l'équipement électronique de lecture (202), la validité du document (205) à vérifier.

6. Procédé selon la revendication 1 dans lequel ledit procédé comporte l'étape supplémentaire consistant à, préalablement à l'étape de lecture (105) des informations mémorisées dans les moyens de contrôle électronique (206), vérifier (103) l'identité de l'utilisateur autorisé.

7. Procédé selon la revendication 1 dans lequel ledit procédé comporte l'étape supplémentaire consistant à déclencher (107), par l'utilisateur autorisé (201), l'opération de transfert (109) de l'information de vérification, au moyen d'un dispositif de contrôle d'affichage (208) de l'information intégré dans l'équipement électronique de lecture (202).

8. Procédé selon la revendication 1 dans lequel ledit procédé comporte l'étape supplémentaire consistant à appairer l'équipement électronique de lecture (202) et le dispositif de visualisation (203).

9. Dispositif (204) de vérification, équipant un utilisateur autorisé (201), d'un document (205) présentant des moyens de contrôle électronique (206), ledit dispositif (204) étant **caractérisé en ce qu'**il comporte :
- un équipement électronique de lecture (202) d'informations mémorisées dans les moyens de contrôle électronique (206) du document vérifié (205) ;
- un dispositif de visualisation transparent (203) positionné, dans des conditions normales d'utilisation, face aux yeux de l'utilisateur autorisé (201) ;
- des moyens de transfert (209) d'une information de vérification, établie à partir des informations mémorisées dans les moyens de contrôle électronique (206), depuis l'équipement électronique de lecture (202), vers le dispositif de visualisation (203) de l'utilisateur autorisé (201).

10. Dispositif (204) selon la revendication 9 dans lequel le dispositif de visualisation (203) est intégré dans une paire de lunettes (213).

11. Dispositif (204) selon la revendication 9 dans lequel les moyens de transfert comportent une connexion filaire blindée (209) reliant le dispositif de visualisation (203) à l'équipement électronique de lecture (202).

12. Dispositif (204) selon la revendication 8 dans lequel l'équipement électronique de lecture (202) comporte des moyens de contrôle (208) de l'affichage de l'information sur le dispositif de visualisation (203).

13. Dispositif (204) selon la revendication 8 dans lequel les moyens de contrôle de l'affichage (208) de l'information sur le dispositif de visualisation (203) comportent une barre de défilement capacitif, notamment placée sur une face accessible de l'équipement électronique de lecture (202).

14. Dispositif (204) selon la revendication 8, comportant en outre des moyens d'identification, notamment placés sur une face accessible de l'équipement électronique de lecture (202), de l'utilisateur autorisé (201).
